# EUROPÄISCHE PATENTSCHRIFT

(11) **EP 0 692 398 B1**
(45) Veröffentlichungstag und Bekanntmachung des Hinweises auf die Patenterteilung: **06.08.1997**
(21) Anmeldenummer: 95110591.5
(22) Anmeldetag: 07.07.1995
(51) Int. Cl.: B60J 3/02

(54) **Sonnenblende für Fahrzeuge**
Sun visor for vehicles
Pare-soleil pour véhicules

(30) Priorität: 14.07.1994 DE 4424663
(43) Veröffentlichungstag der Anmeldung: 17.01.1996
(73) Patentinhaber: Benecke-Kaliko Aktiengesellschaft, D-30419 Hannover (DE); BECKER GROUP EUROPE GmbH, 42285 Wuppertal (DE)
(72) Erfinder: Mailänder, Ralph, D-66740 Saarlouis (DE); Eickhoff, Thomas, D-84085 Langquaid (DE); Viertel, Lothar, 66802 Altforweiler (DE)
(74) Vertreter: Patentanwälte Thömen & Körner

(56) Entgegenhaltungen:
- EP-A- 0 291 854
- EP-A- 0 468 810
- DE-A- 2 102 917
- DE-A- 3 614 481
- DE-U- 9 110 948
- FR-A- 2 595 072
- PATENT ABSTRACTS OF JAPAN vol. 11 no. 1 (M-550) ,6.Januar 1987 & JP-A-61 181721 (KASAI KOGYO CO) 14.August 1986,

## Beschreibung

Die Erfindung betrifft eine Sonnenblende für Fahrzeuge nach dem Oberbegriff des Anspruchs 1 und ein verfahren zur Herstellung einer Sonnenblende nach dem Oberbegriff des Anspruchs 13.

Sonnenblenden für Fahrzeuge bestehen üblicherweise aus einem Grundkörper inklusive Verstärkung, der eine Schwenkachse und ein Schwenklager aufnimmt sowie aus einer Dekorware, mit der der Grundkörper überzogen ist. Die Dekorware ist hierbei auf Schweißbarkeit ausgelegt, um die umlaufende Verbindung des Dekorzuschnittes durch Schweißen, wie Hochfrequenzschweißen, Ultraschallschweißen oder Reibschweißen herzustellen.

Außerdem ist aus der DE 21 02 917 A1 eine Sonnenblende für Fahrzeuge bekannt, die eine Platte umfaßt, wobei die Platte ein flaches Teil aus zähelastischem, geschäumtem Kunststoff ist, dessen Randzone aus einer wesentlich dichteren, weitgehend ungeschäumten Schicht dieses Kunststoffes besteht.

Ferner ist aus der DE 91 10 948 U eine Sonnenblende für Fahrzeuge bekannt, die zwei geschäumte Polsterkörper umfaßt. In die Polsterkörper sind Versteifungselemente eingelegt. Die Polsterkörper sind mit einer Dekorschicht bezogen, die im Randbereich umgebugt und auf der Rückseite der Polsterkörper an Vorsprüngen eingehängt ist. Die Polsterkörper sind an ihren Rückseiten verbunden.

Die bisherigen Sonnenblenden erfordern ein spezielles Werkzeug zur Herstellung und Formung des Grundkörpers und benötigen ferner Versteifungselemente und spezielle, auf die Form des Grundkörpers abgestimmte Zuschnitte von Dekormaterial, das dann in einem gesonderten Verfahren auf den Grundkörper aufgebracht und dort befestigt werden muß.

Der Erfindung liegt die Aufgabe zugrunde, eine Sonnenblende zu schaffen, deren konstruktiver Aufbau die Voraussetzungen bietet, Verschnittmaterialien von Verkleidungselementen als Ausgangsmaterial zu verwenden, das bereits von sich aus eine ausreichende Eigensteiffigkeit bietet, sowie ein Verfahren anzugeben, das die Herstellung von Sonnenblenden aus diesen Materialien ermöglicht.

Diese Aufgabe wird bei einer Sonnenblende nach dem Oberbegriff des Patentanspruchs 1 durch die im kennzeichnenden Teil angegebenen Merkmale gelöst und bei einem Verfahren nach dem Oberbegriff des Patentanspruchs 13 durch die im kennzeichnenden Teil des Anspruchs 13 angegebenen Merkmale.

Die beidseitige Belegung der Sonnenblende mit einer Dekorschicht wird dadurch erreicht, daß zwei aus einem plattenförmigen Halbzeug aus einem mehrschichtigen Material umgeformte Formlinge verwendet werden, die auf ihrer jeweiligen Außenseite flächig mit der Dekorschicht kaschiert und an ihren dekorfreien Rückseiten verbunden sind. Durch das mehrschichtige Material in sogenannter Sandwich-Bauweise wird die notwendige mechanische Steifigkeit der Sonnenblende ohne zusätzliche Versteifungselemente erreicht. Das Einbringen von Hohlräumen zur Aufnahme von Einlegeteilen wird dadurch erleichtert, daß diese Hohlräume zunächst getrennt eingeprägt werden können, so daß sich auch kompliziertere Formen der Hohlräume herstellen lassen und eventuell die Einlegeteile vor dem Zusammenfügen der Formlinge eingebaut werden können. Die Kanten der Formlinge lassen sich durch Umbugen der Dekorschicht übergangslos und einheitlich wie die beiden Flachseiten der Sonnenblende verkleiden. Dadurch ergibt sich eine saubere, optisch einwandfreie Randkontur.

Die Dekorschicht kann jeweils um die gesamte umlaufende Außenkante der Formlinge umgebugt sein oder die Formlinge können alternativ durch eine durchgehende Dekorschicht an einer Längskante verbunden und um diese Längskante zusammengeklappt sein, wobei die Dekorschicht jeweils nur an den verbleibenden umlaufenden Außenkanten der Formlinge umgebugt ist.

Die erste Variante ergibt ein einheitliches äußeres Erscheinungsbild, während die zweite Variante in der Fertigung einfacher herzustellen ist, da einerseits nur ein Teilbereich der Kanten umgebugt werden muß und andererseits durch die die beiden Formlinge verbindende Dekorschicht die genaue Ausrichtung der Formlinge beim flächigen Verbinden ihrer Rückseiten vorgegeben ist.

Zur Bildung des Kantenbereichs kann die Dekorschicht einen über die endgültige Kontur der Sonnenblende vorstehenden Überstand aufweisen, der umgebugt und mit der angrenzenden Rückseite des Formlings thermisch oder adhäsiv verbunden ist. Die Dekorschicht liegt dadurch auch im umgebugten Bereich stramm am Formling an und ist dauerhaft fixiert.

Alternativ kann auch der Formling einen über die endgültige Kontur der Sonnenblende vorstehenden Überstand aufweisen, der insgesamt umgebugt und mit der angrenzenden Rückseite des Formlings thermisch verbunden ist. In diesem Fall sind die im umgebugten Randbereich liegenden thermisch verbundenen Bereiche des Formlings insgesamt auf ein vorgegebenes Dickenmaß umgeformt und gefügt.

Bei dieser Ausführung kann das Ausgangsmaterial aus Halbzeug und Dekorschicht in einem Arbeitsgang ausgeschnitten oder ausgestanzt werden und beim Umbugen des Überstandes ergibt sich zusätzlich eine Randverstärkung der Sonnenblende. Das Umformen der im Randbereich liegenden thermisch verbundenen Bereiche des Formlings auf ein vorgegebenes Dickenmaß ermöglicht, daß die beiden Formlinge an ihren Rückseiten verbunden werden können, ohne daß an den Rändern eine Verdickung entsteht.

Zweckmäßig ist der Schaumkern des plattenförmigen Halbzeugs Polyurethan-Schaum.

Dieses Material besitzt thermoplastische Eigenschaften und kann beim Umbugvorgang durch thermische Beaufschlagung und Druckbeaufschlagung umgeformt und auch komprimiert werden.

Die äußeren Schichten des plattenförmigen Halbzeugs können durch Kunststoffolien gebildet sein.

Bei dieser Ausführung ist die Sonnenblende bei einer späteren Verwertung der Teile recycelbar.

Alternativ können die äußeren Schichten auch durch Laminate mit dem Schichtenaufbau Kunststoffolie - Faservliesschicht - Kunststoffolie gebildet sein.

Bei dieser Ausführung wird eine besonders hohe mechanische Steifigkeit erreicht, so daß man mit einer sehr geringen Dicke des Schaumkernes auskommt.

Die Kunststoffolien können aus Polyethylen bestehen.

Dieses thermoplastische Material paßt sich beim Umbugvorgang geschmeidig an und erleichtert so die Formung der Kanten.

Als Material für die Dekorschicht eignet sich künstliches oder natürliches Folien- oder Textilmaterial. Diese Materialvielfalt ist dadurch möglich, daß keine Eignung auf Hochfrequenzschweißbarkeit erforderlich ist.

Die Dekorschicht kann auf ihrer Rückseite eine Schaumschicht tragen. Dadurch ist die Oberfläche der Sonnenblende bei Berührung weich und nachgiebig.

Bei einer bevorzugten Ausgestaltung der Sonnenblende ist der Zuschnitt des plattenförmigen Halbzeugs mit der Dekorschicht aus dem gleichen Material wie ein Formhimmel des Fahrzeugs, vorzugsweise aus Verschnittmaterial ausgestanzt.

Neben einem sparsameren Umgang mit Rohstoffen bei der Herstellung des Fahrzeugs und einer damit verbundenen Kosteneinsparung wird erreicht, daß die Sonnenblende die identische Struktur der Dachverkleidung und die gleiche farbliche Abstimmung besitzt. Außerdem ist eine geringere Materialvielfalt im Fahrzeuginnenraum vorhanden, was sich für eine spätere Wiederverwertung der Kunststoffteile vorteilhaft auswirkt.

Mit dem Verfahren zur Herstellung einer Sonnenblende nach Anspruch 13 wird ermöglicht, eine Sonnenblende mit einer allseitig vorhandenen Dekorschicht aus zwei plattenförmigen Halbzeugen herzustellen, die jeweils nur an einer Seite mit einer Dekorschicht kaschiert sind. Es kann das identische Material verwendet werden, das auch für die Herstellung der Dachverkleidung benutzt wird. Dabei besteht die Möglichkeit, die Ausgangsmaterialien für die Dachverkleidung und die Sonnenblende in einem Arbeitsgang zu produzieren.

Durch die Verwendung zweier plattenförmigen Halbzeuge ist es möglich, die Hohlräume für die Einlegeteile von der dekorfreien Rückseite der plattenförmigen Halbzeuge aus zu prägen und zwar für die Sonnenblendenachse und die Schwenklager komplementär in den beiden mit spiegelsymmetrischer Rückseite zueinander beschnittenen und zu Formlingen geformten Halbzeugen. Es sind somit also auch Hinterschneidungen herstellbar, wie sie in einem einstückigen Körper nur mit extrem großem Aufwand hergestellt werden können. Besonders die Einbettung von im Durchmesser vergrößerten Teilen ist dabei im Zuge der Montage der Sonnenblende vor dem Verbinden der Formlinge möglich.

Die Herstellung der Kanten wird durch Umbugen der Dekorschicht bewirkt, wobei sowohl die Möglichkeit besteht, daß die Dekorschicht allein über die endgültige Kontur der Sonnenblende vorsteht und für sich umgebugt wird, als auch, daß Formling mit der Dekorschicht über die endgültige Kontur der Sonnenblende vorsteht und diese gemeinsam umgebugt werden. Bei der ersten Variante kann die Dekorschicht thermisch oder adhäsiv mit der Rückseite des Formlings verbunden werden, während bei der zweiten Variante der Überstand mit der angrenzenden Rückseite des jeweiligen Formlings auf ein vorgegebenes Dickenmaß umgeformt und thermisch verbunden wird. Dabei wird der Überstand thermisch und unter Druck verdichtet, umgebugt und mit der angrenzenden Rückseite des Formlings abermals thermisch und unter Druck verdichtet, ohne daß überschüssiges Material verdrängt werden muß. Durch das Anschmelzen wird eine thermische Verbindung erzeugt.

Vorzugsweise werden die beiden plattenförmigen Halbzeuge gleichzeitig mit dem Formhimmel des Fahrzeugs aus dem Ausgangsmaterial, vorzugsweise aus einem Schiebedachbereich ausgestanzt.

Die plattenförmigen Halbzeuge mit der Dekorschicht werden also gleichzeitig mit der Fertigung des Formhimmels hergestellt. Damit sind zweierlei Vorteile gegenüber der bisherigen Praxis verbunden. Zum einen entfällt die gesonderte Herstellung des Grundkörpers für die Sonnenblende, zum anderen wird Verschnittmaterial, hier der Schiebedachbereich, ausgenutzt. Bisher konnte dieses wertvolle Material nicht in der Produktion verwendet werden, sondern allenfalls als Recyclingmaterial in den Rohstoffkreislauf zurückgeführt werden.

Weiterbildungen und vorteilhafte Ausgestaltungen der Erfindung ergeben sich aus den Ansprüchen, der weiteren Beschreibung und der Zeichnung, anhand der die Erfindung erläutert wird.

In der Zeichnung zeigen:
- Fig. 1: eine perspektivische Ansicht eines noch unverarbeiteten plattenförmigen Halbzeugs,
- Fig. 2: einen Schnitt in Richtung AA gemäß Fig. 1, bei der jedoch ein Überstand umgebugt ist und
- Fig. 3: den Randbereich einer fertigen Sonnenblende mit zwei im Randbereich umgebugten und aneinandergeklebten Formlingen.

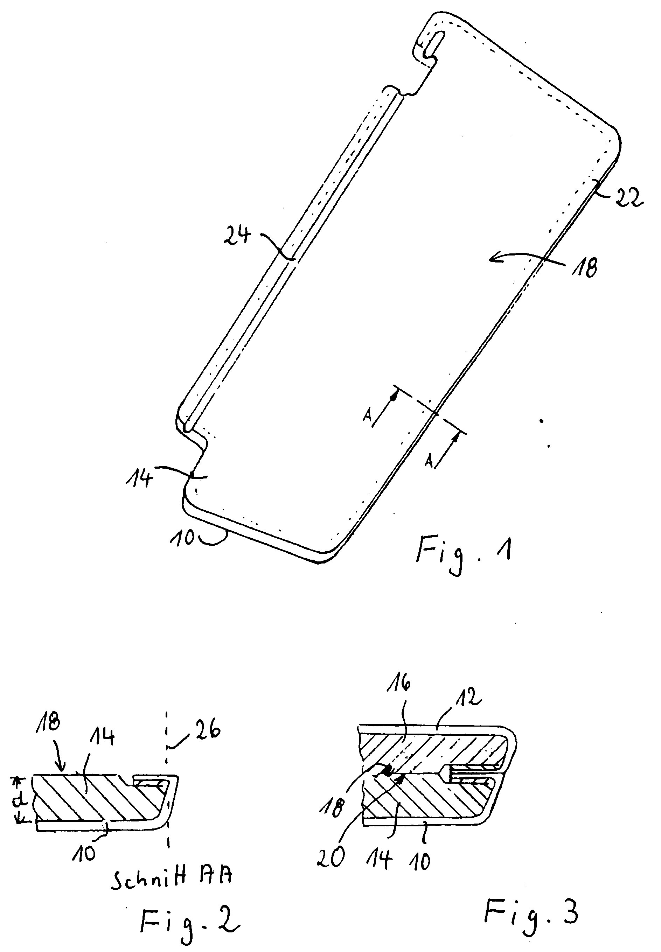

Fig. 1 zeigt eine perspektivische Ansicht eines plattenförmigen Halbzeugs, dessen sichtbare Seite die Rückseite 18 ist. Die hier unten liegende Vorderseite ist mit einer Dekorschicht 10 kaschiert. Das plattenförmigen Halbzeug umfaßt einen geschäumten Kunststoffkern, in den Einprägungen 24 als Hohlräume zur Aufnahme von Einlegeteilen eingearbeitet sind.

In Fig. 1 ist durch eine gestrichelte Linie im Randbereich des plattenförmigen Halbzeugs die endgültige Kontur des Formlings 14 der Sonnenblende angedeutet. Der hier gezeigte Zuschnitt weist einen Überstand 22 auf, der umgebugt und mit der dann angrenzenden Rückseite 18 des Formlings 14 thermisch verbunden wird.

Dieser Zustand ist für den Schnitt entlang der Schnittlinie AA in Fig. 2 dargestellt. Ursprünglich setzte sich das plattenförmige Halbzeug mit der Dekorschicht 10 nach rechts fort. An einer Umbugkante 26 wurde der Überstand 22 unter thermischer Beaufschlagung und Druckbeaufschlagung komprimiert und um etwa 180 Grad umgebugt, so daß die Rückseite des Überstandes 22 auf der Rückseite 18 des planen, also nicht umgebugten Teils zu liegen kommt. Die verbundenen Bereiche des Halbzeugs sind dann so weit unter thermischer Einwirkung und Druckeinwirkung beaufschlagt worden, bis die Dekorschicht 10 und die verbundenen Bereiche des Halbzeugs insgesamt auf ein vorgegebenes Dickenmaß d komprimiert sind.

Der Formling 14 mit der Dekorschicht 10, wie in Fig. 1 dargestellt ist, wird zur Herstellung einer kompletten Sonnenblende durch einen weiteren spiegelbildlich geformten Formling mit einer Dekorschicht verbunden.

Dieser Zustand ist als Ausschnitt in Fig. 3 dargestellt. Der untere Bereich dieser Darstellung entspricht derjenigen in Fig. 2. In Fig. 3 ist jedoch auch ein oberer Formling 16 mit einer Dekorschicht 12 vorhanden, der analog zum unteren Formling 14 mit der Dekorschicht 10 umgebugt wurde. Da in beiden Fällen die Randbereiche auf ein vorgegebenes Dickenmaß d komprimiert sind, haben beide Formlinge eine konstante Dicke und können so flächig oder auch nur teilflächig im Randbereich miteinander verklebt werden. Die Verbindung bzw. Verklebung erfolgt hier an den dekorfreien Rückseiten 18 und 20 der Formlinge 14 und 16.

Die Formlinge 14 und 16 bestehen aus einem mehrschichtigen Material mit einem Schaumkern und äußeren Schichten, wobei die äußeren Schichten entweder Kunststoffolien oder Laminate mit dem Schichtenaufbau Kunststoffolie - Faservliesschicht - Kunststoffolie sein können. Als Schaummaterial wird bevorzugt Polyurethan-Schaum eingesetzt und als Material für die Kunststoffolien Polyethylen.

## Patentansprüche

1. Sonnenblende für Fahrzeuge, bestehend aus einem Träger mit einem geschäumten Kunststoffkern, der Hohlräume zur Aufnahme von Einlegeteilen, wie Sonnenblendenachse, Schwenklager, Spiegel aufweist und eine äußere Dekorschicht (10, 12) trägt, wobei der Träger aus zwei Trägerteilen besteht, bei denen die Dekorschicht (10, 12) um die Außenkante des jeweiligen Trägerteils bis einschließlich in den Randbereich seiner Rückseite (18, 20) umgebugt ist und die beiden Trägerteile auf ihren Rückseiten (18, 20) verbunden sind, dadurch gekennzeichnet, daß die Trägerteile aus einem plattenförmigen Halbzeug aus einem mehrschichtigen Material mit einem Schaumkern und äußeren Schichten bestehen, die auf ihrer jeweiligen Außenseite flächig mit der Dekorschicht (10, 12) kaschiert und mit dieser zur Bildung einer Außenkontur und innerer Einprägungen (24) für Hohlräume zu Formlingen (14, 16) umgeformt und beschnitten sind und die Formlinge (14, 16) vollflächig oder teilflächig am Randbereich miteinander auf ihren Rückseiten (18, 20) verklebt sind.

2. Sonnenblende nach Anspruch 1, dadurch gekennzeichnet, daß die Dekorschicht (10, 12) um die gesamte umlaufende Außenkante des jeweiligen Formlings (14, 16) umgebugt ist.

3. Sonnenblende nach Anspruch 1, dadurch gekennzeichnet, daß beide Formlinge (14, 16) an einer Längskante durch eine durchgehende Dekorschicht (10, 12) verbunden und an dieser Längskante zusammengeklappt sind und daß die Dekorschicht (10, 12) jeweils nur an den verbleibenden umlaufenden Außenkanten der Formlinge (14, 16) umgebugt ist.

4. Sonnenblende nach einem der Ansprüche 1 bis 3, dadurch gekennzeichnet, daß die Dekorschicht (10; 12) einen über die endgültige Kontur der Sonnenblende vorstehenden Überstand (22) aufweist und der Überstand (22) der Dekorschicht (10; 12) umgebugt sowie mit der angrenzenden Rückseite (18; 20) des jeweiligen Formlings (14; 16) thermisch oder adhäsiv verbunden ist.

5. Sonnenblende nach einem der Ansprüche 1 bis 3, dadurch gekennzeichnet, daß der Formling (14; 16) und die Dekorschicht (10; 12) einen über die endgültige Kontur der Sonnenblende vorstehenden Überstand (22) aufweisen, daß der gesamte Überstand (22) umgebugt und mit der angrenzenden Rückseite (18; 20) des jeweiligen Formlings (14; 16) thermisch verbunden ist, wobei der umgebugte Teil der Dekorschicht (10, 12) und die im umgebugten Randbereich liegenden thermisch verbundenen Bereiche des Formlings (14; 16) insgesamt auf ein vorgegebenes Dickenmaß (d) umgeformt und gefügt sind.

6. Sonnenblende nach einem der Ansprüche 1 bis 5, dadurch gekennzeichnet, daß der Schaumkern des plattenförmigen Halbzeugs Polyurethan-Schaum ist.

7. Sonnenblende nach einem der Ansprüche 1 bis 7, dadurch gekennzeichnet, daß die äußeren Schichten des plattenförmigen Halbzeugs durch Kunststoffolien gebildet sind.

8. Sonnenblende nach einem der Ansprüche 1 bis 7, dadurch gekennzeichnet, daß die äußeren Schichten des plattenförmigen Halbzeugs durch Laminate mit dem Schichtenaufbau Kunststoffolie - Faservlies-Schicht - Kunststoffolie gebildet sind.

9. Sonnenblende nach Anspruch 7 oder 8, dadurch gekennzeichnet, daß die Kunststoffolien aus Polyetylen bestehen.

10. Sonnenblende nach einem der Ansprüche 1 bis 9, dadurch gekennzeichnet, daß die Dekorschicht (10; 12) aus künstlichem oder natürlichem Folien- oder Textilmaterial besteht.

11. Sonnenblende nach Anspruch 10, dadurch gekennzeichnet, daß Dekorschicht (10; 12) auf ihrer Rückseite eine Schaumschicht trägt.

12. Sonnenblende nach einem der Ansprüche 1 bis 10, dadurch gekennzeichnet, daß der Zuschnitt des plattenförmigen Halbzeugs mit der Dekorschicht aus dem gleichen Material wie ein Formhimmel des Fahrzeugs, vorzugsweise aus Verschnittmaterial ausgestanzt ist.

13. Verfahren zur Herstellung einer Sonnenblende nach Anspruch 1, dadurch gekennzeichnet, daß zuerst ein plattenförmiges Halbzeug aus einem mehrschichtigen Material mit einem Schaumkern und äußeren Schichten, das mit einer Dekorschicht (10, 12) flächig kaschiert ist oder während eines nachfolgenden Umformvorganges mit einer Dekorschicht (10, 12) flächig kaschiert wird, zusammen mit der Dekorschicht (10, 12) zur Bildung einer Außenkontur und innerer Einprägungen (24) für Hohlräume zu Formlingen (14, 16) umgeformt und beschnitten wird, daß danach die Dekorschicht (10; 12) um die Außenkante des jeweiligen Formlings (14; 16) bis einschließlich in den Randbereich seiner Rückseite (18; 20) umgebugt wird, daß anschließend Einlegeteile in die Einprägungen (24) eingesetzt und fixiert werden und daß schließlich die Formlinge (14, 16) auf ihren Rückseiten (18, 20) vollflächig oder teilflächig am Randbereich mit Klebstoff versehen und verklebt werden.

14. Verfahren nach Anspruch 13, dadurch gekennzeichnet, daß die Dekorschicht (10; 12) auf einen über die endgültige Kontur der Sonnenblende vorstehenden Überstand (22) beschnitten und der Überstand (22) der Dekorschicht (10; 12) umgebugt sowie mit der angrenzenden Rückseite (18; 20) des jeweiligen Formlings (14; 16) thermisch oder adhäsiv verbunden wird.

15. Verfahren nach Anspruch 13, dadurch gekennzeichnet, daß der Formling (14; 16) und die Dekorschicht (10; 12) auf einen über die endgültige Kontur der Sonnenblende vorstehenden Überstand (22) beschnitten und der gesamte Überstand (22) umgebugt sowie mit der angrenzenden Rückseite (18; 20) des jeweiligen Formlings (14; 16) auf ein vorgegebenes Dickenmaß (d) umgeformt und thermisch verbunden wird.

16. Verfahren nach einem der Ansprüche 13 bis 15, dadurch gekennzeichnet, daß der Zuschnitt des plattenförmigen Halbzeugs gleichzeitig mit dem Formhimmel des Fahrzeugs aus dem Ausgangsmaterial, vorzugsweise aus einem Schiebedachbereich, ausgestanzt wird.

## Claims

1. Sun visor for vehicles, consisting of a support having a foamed plastics core, which possesses cavities for receiving inserted components, such as sun visor axis, pivot bearing, mirror, and carries an outer decorative layer (10, 12), the support consisting of two support parts, wherein the decorative layer (10, 12) is bent around the outer edge of the relevant support part and into the edge region of its rear face (18, 20) and the two support parts are connected together on their rear faces (18, 20), characterized in that the support parts consist of a plate-shaped semifinished product of a multilayer material having a foam core and outer layers, which are each laminarly lined on their relevant outer face with the decorative layer (10, 12) and are moulded with the latter into mouldings (14, 16) to form an outer contour and inner indentations (24) for cavities and are trimmed and the mouldings (14, 16) are glued together over their entire or partial area at the edge region on their rear faces (18, 20).

2. Sun visor according to claim 1, characterized in that the decorative layer (10, 12) is bent around the entire peripheral outer edge of the relevant moulding (14, 16).

3. Sun visor according to claim 1, characterized in that the two mouldings (14, 16) are connected together at one longitudinal edge by a continuous decorative layer (10, 12) and are folded together at this longitudinal edge, and that the decorative layer (10, 12) in each case is bent over only at the remaining peripheral outer edges of the mouldings (14, 16).

4. Sun visor according to one of claims 1 to 3, characterized in that the decorative layer (10; 12) possesses a projection (22) extending beyond the final contour of the sun visor and the projection (22) of the decorative layer (10; 12) is bent over and is thermally or adhesively bonded to the adjacent rear face (18; 20) of the relevant moulding (14; 16).

5. Sun visor according to one of claims 1 to 3, characterized in that the moulding (14; 16) and the decorative layer (10; 12) possess a projection (22) extending beyond the final contour of the sun visor, that the entire projection (22) is bent over and is thermally connected to the adjacent rear face (18; 20) of the relevant moulding (14; 16), the bent-over part of the decorative layer (10, 12) and the thermally bonded regions of the mouldings (14; 16) situated in the bent-over edge region being shaped as a whole to a predetermined thickness dimension (d) and joined together.

6. Sun visor according to one of claims 1 to 5, characterized in that the foam core of the plate-shaped semifinished product is of polyurethane foam.

7. Sun visor according to one of claims 1 to 6, characterized in that the outer layers of the plate-shaped semifinished product are formed of plastics sheets.

8. Sun visor according to one of claims 1 to 7, characterized in that the outer layers of the plate-shaped semifinished product are formed of laminates having the layered construction plastics sheet/fibrous fleece layer/plastics sheet.

9. Sun visor according to claim 7 or 8, characterized in that the plastics sheets are of polyethylene.

10. Sun visor according to one of claims 1 to 9, characterized in that the decorative layer (10, 12) consists of an artificial or natural sheet material or textile material.

11. Sun visor according to claim 10, characterized in that the decorative layer (10; 12) carries a foam layer on its rear face.

12. Sun visor according to one of claims 1 to 10, characterized in that the cut piece of the plate-shaped semifinished product with the decorative layer is stamped out from the same material as a headliner for the vehicle, preferably from waste material.

13. Method of making a sun visor according to claim 1, characterized in that first a plate-shaped semifinished product of a multilayer material having a foam core and outer layers, which has been laminarly faced with a decorative layer (10, 12) or is laminarly faced during a succeeding shaping operation with a decorative layer (10, 12), is shaped, together with the decorative layer (10, 12), into mouldings (14, 16) to form an outer contour and inner indentations (24) for cavities and is trimmed, that then the decorative layer (10; 12) is bent over around the outer edge of the relevant moulding (14; 16) into the edge region of its rear face (18; 20), that then insert components are inserted into the indentations (24) and fixed and that, finally, the mouldings (14, 16) are provided with adhesive and glued on their rear faces (18, 20) over the entire or partial area in the edge zone.

14. Method according to claim 13, characterized in that the decorative layer (10; 12) is trimmed to a projection (22) extending beyond the final contour of the sun visor and the projection (22) of the decorative layer (10; 12) is bent over and is thermally or adhesively bonded to the adjacent rear face (18; 20) of the relevant moulding (14; 16).

15. Method according to claim 13, characterized in that the moulding (14; 16) and the decorative layer (10; 12) are trimmed to a projection (22) extending beyond the final contour of the sun visor and the entire projection (22) is bent over and is shaped with the adjacent rear face (18; 20) of the relevant moulding (14; 16) to a predetermined thickness dimension (d) and is thermally bonded.

16. Method according to one of claims 13 to 15, characterized in that the cut piece of the plate-shaped semifinished product is stamped out simultaneously with the headliner of the vehicle from the starting material, preferably from a sliding roof zone.

## Revendications

1. Pare-soleil pour véhicules se composant d'un support avec un noyau de mousse de plastique qui comporte des cavités de réception de pièces d'insertion, telles que axe du pare-soleil, paliers de pivot, miroir, et qui porte une couche externe de décoration (10, 12), le support comprenant deux parties, la couche de décoration (10, 12) étant plaquée autour des bords externes de chaque partie, y compris dans la zone de bordure de sa face arrière (18, 20), et les deux parties étant reliées sur leurs faces arrière (18, 20), caractérisé en ce que les parties se composent d'un produit semi-fini en forme de plaque, en matériau multicouche, avec un noyau de mousse et des couches externes qui sont stratifiées à plat sur chacune de leurs faces externes, avec la couche de décoration (10, 12), et sont plaquées et découpées en blocs (14, 16), munis de la couche de décoration, pour former un contour externe et des empreintes internes (24) des cavités, les blocs (14, 16) étant collés l'un à l'autre par leurs faces arrière (18, 20), entièrement ou partiellement sur leurs zones de bordure.

2. Pare-soleil suivant la revendication 1, caractérisé en ce que la couche de décoration (10, 12) est plaquée autour des bords externes de chaque bloc (14, 16), qui l'entourent totalement.

3. Pare-soleil suivant la revendication 1, caractérisé en ce que les deux blocs (14, 16) sont reliés, sur un bord longitudinal, par une couche de décoration continue (10, 12) et sont repliés ensemble sur ce bord longitudinal, et en ce que la couche de décoration (10, 12) n'est respectivement plaquée que sur le bord externe restant entourant le bloc (14, 16).

4. Pare-soleil suivant l'une des revendications 1 à 3, caractérisé en ce que la couche de décoration (10; 12) présente une saillie (22) qui déborde sur le contour effectif du pare-soleil, la saillie (22) de la couche de décoration (10; 12) étant plaquée ainsi que reliée thermiquement ou avec adhésif à la face arrière (18; 20) de chaque bloc (14; 16).

5. Pare-soleil suivant l'une des revendications 1 à 3, caractérisé en ce que le bloc (14; 16) et la couche de décoration (10; 12) comportent une saillie (22) qui déborde sur le contour effectif du pare-soleil, en ce que toute la saillie (22) est plaquée et reliée thermiquement à la face arrière (18; 20) de chaque bloc (14; 16), la partie plaquée de la couche de décoration (10, 12) et la zone du bloc (14; 16) qui est reliée thermiquement et qui se trouve dans la zone de bordure plaquée étant formées et assemblées totalement sur une épaisseur donnée (d).

6. Pare-soleil suivant l'une des revendications 1 à 5, caractérisé en ce que le noyau de mousse du produit semi-fini en plaque est de la mousse de polyuréthanne.

7. Pare-soleil suivant l'une des revendications 1 à 6, caractérisé en ce que les couches externes du produit semi-fini en plaque sont formées par de minces bandes de plastique.

8. Pare-soleil suivant l'une des revendications 1 à 7. caractérisé en ce que les couches externes du produit semi-fini en plaque sont formées par des laminés avec une structure de couches du genre mince bande de plastique - couche de non-tissé - mince bande de plastique.

9. Pare-soleil suivant la revendication 7 ou 8, caractérisé en ce que la mince bande de plastique est en polyéthylène.

10. Pare-soleil suivant l'une des revendications 1 à 9, caractérisé en ce que la couche de décoration (10; 12) est en matière en feuille ou en textile artificiels ou naturels.

11. Pare-soleil suivant la revendication 10, caractérisé en ce que la couche de décoration (10; 12) porte une couche de mousse sur sa face arrière.

12. Pare-soleil suivant l'une des revendications 1 à 10, caractérisé en ce que la pièce découpée de produit semi-fini en plaque est découpée à la matrice, avec la couche de décoration, dans le même matériau qu'un habillage moulé de plafond de voiture, de préférence en matériau de coupes.

13. Procédé de fabrication d'un pare-soleil suivant la revendication 1, caractérisé en ce que, d'abord, un produit semi-fini en plaque en un matériau multicouche, comportant un noyau de mousse et des couches externes qui est stratifié à plat avec une couche de décoration (10, 12), est plaqué et découpé en blocs (14, 16) avec la couche de décoration (10, 12), pour former un contour externe et des empreintes internes (24) de cavités, en ce qu'ensuite la couche de décoration (10; 12) est plaquée autour des bords externes de chaque bloc (14; 16), y compris dans la zone de bordure de sa face arrière (18; 20), en ce que les pièces d'insertion de fixation sont mises en place et fixées dans les empreintes (24), et en ce qu'enfin les blocs (14, 16) sont pourvus de colle et collés par leurs faces arrière (18, 20) totalement ou partiellement sur la zone du bordure.

14. Procédé suivant la revendication 13, caractérisé en ce que la couche de décoration (10; 12) est découpée sur une saillie (22) qui déborde sur le contour effectif du pare-soleil, la saillie (22) de la couche de décoration (10; 12) étant plaquée ainsi que reliée thermiquement ou avec adhésif à la face arrière (18; 20) de chaque bloc (14; 16).

15. Procédé suivant la revendication 13, caractérisé en ce que le bloc (14; 16) et la couche de décoration (10; 12) sont découpés sur une saillie (22) qui déborde sur le contour effectif du pare-soleil, toute la saillie (22) est plaquée, ainsi que mise en forme et reliée thermiquement à la face arrière (18; 20) de chaque bloc (14; 16) sur une épaisseur donnée (d).

16. Procédé suivant l'une des revendications 13 à 15, caractérisé en ce que la pièce découpée de produit semi-fini en plaque est découpée à la matrice, en même temps que l'habillage de plafond de voiture, en matière première, de préférence hors d'une zone de toit ouvrant.
